# EUROPEAN PATENT SPECIFICATION

(11) **EP 4 325 029 B1**
(45) Date of publication and mention of the grant of the patent: **18.02.2026**
(21) Application number: 23189823.0
(22) Date of filing: 04.08.2023
(51) Int. Cl.: F01D 25/24, F01D 5/28, F01D 9/04, F01D 5/14, F01D 25/00

(54) **GAS TURBINE ENGINE STATOR VANES FORMED OF CERAMIC MATRIX COMPOSITES AND HAVING ATTACHMENT FLANGES**
GASTURBINENMOTORSTATORSCHAUFELN AUS KERAMIKMATRIXVERBUNDSTOFFEN MIT BEFESTIGUNGSFLANSCHEN
AUBES STATORIQUE DE MOTEUR À TURBINE À GAZ FORMÉES DE COMPOSITES À MATRICE CÉRAMIQUE ET AYANT DES BRIDES DE FIXATION

(30) Priority: 15.08.2022 US 202217887782
(43) Date of publication of application: 21.02.2024
(73) Proprietor: RTX Corporation, Farmington, CT 06032 (US)
(72) Inventor: BURDETTE, Alyson T., Gilbertsville, 19525 (US)
(74) Representative: Dehns

(56) References cited:
- US-A1- 2009 110 546
- US-A1- 2014 271 153
- US-A1- 2017 030 223
- US-A1- 2018 135 437
- US-A1- 2018 163 552

## Description

### BACKGROUND OF THE INVENTION

This application related to a stator vane formed of ceramic matrix composites ("CMC") wherein attachment flanges are formed to facilitate mounting of the stator vane.

Gas turbine engines are known, and typically include a fan delivering air into a bypass duct as propulsion air. The fan also delivers air into a compressor where it is compressed. The compressed air passes into a combustor where it is mixed with fuel and ignited. Products of this combustion pass downstream over turbine rotors, driving them to rotate.

It is known that the products of combustion are quite hot, and thus the components in the turbine section are exposed to very high temperatures. Various techniques are used to maintain the operability of those turbine section components.

The components in the turbine section include rotating blade rows and intermediate static stator vane rows. The static stator vanes must be mounted within the housing. Mount flanges have been utilized that have generally extended in a circumferential direction relative to an axis of rotation of the engine.

One approach to providing turbine components that can survive very high temperatures is to form them of CMCs. Typically a CMC component is formed of a plurality of plies that are laid up to make the overall component. There are challenges with CMC components.

US 2014/271153 A1 discloses a prior art plurality of stator vanes as set forth in the preamble of claim 1.

### SUMMARY OF THE INVENTION

In one aspect, there is provided a plurality of stator vanes for use in a gas turbine engine as recited in claim 1.

There is also provided a gas turbine engine as recited in claim 11.

Features of embodiments are set forth in the dependent claims.

The present disclosure may include any one or more of the individual features disclosed above and/or below alone or in any combination thereof.

These and other features of the present invention can be best understood from the following specification and drawings, the following of which is a brief description.

### BRIEF DESCRIPTION OF THE DRAWINGS

Figure 1 schematically shows a gas turbine engine.
Figure 2A shows a stator vane.
Figure 2B is a cross-sectional view along line B-B of Figure 2A.
Figure 3 shows further detail of the formation and mounting of the stator vane according to this disclosure.
Figure 4 shows an alternative embodiment, which includes a seal.
Figure 5 shows an alternative embodiment for securing two vanes.

### DETAILED DESCRIPTION

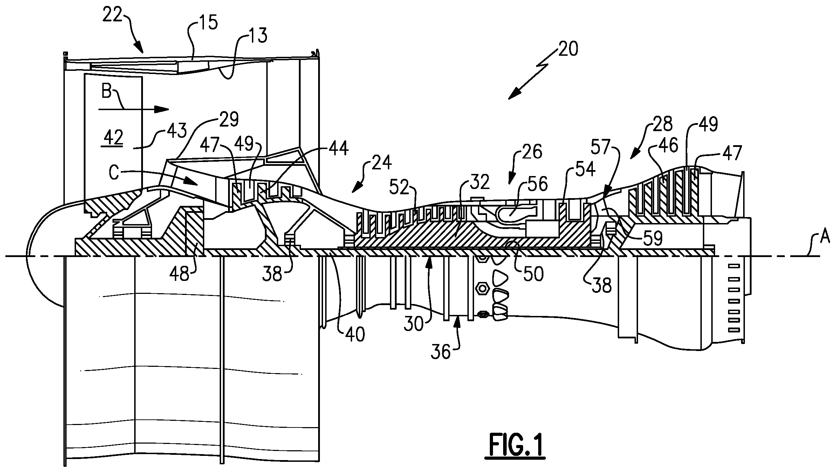

Figure 1 schematically illustrates a gas turbine engine 20. The gas turbine engine 20 is disclosed herein as a two-spool turbofan that generally incorporates a fan section 22, a compressor section 24, a combustor section 26, and a turbine section 28. The fan section 22 may include a single-stage fan 42 having a plurality of fan blades 43. The fan blades 43 may have a fixed stagger angle or may have a variable pitch to direct incoming airflow from an engine inlet. The fan 42 drives air along a bypass flow path B in a bypass duct 13 defined within a housing 15 such as a fan case or nacelle, and also drives air along a core flow path C for compression and communication into the combustor section 26 then expansion through the turbine section 28. A splitter 29 aft of the fan 42 divides the air between the bypass flow path B and the core flow path C. The housing 15 may surround the fan 42 to establish an outer diameter of the bypass duct 13. The splitter 29 may establish an inner diameter of the bypass duct 13. Although depicted as a two-spool turbofan gas turbine engine in the disclosed nonlimiting embodiment, it should be understood that the concepts described herein are not limited to use with two-spool turbofans as the teachings may be applied to other types of turbine engines including three-spool architectures. The engine 20 may incorporate a variable area nozzle for varying an exit area of the bypass flow path B and/or a thrust reverser for generating reverse thrust.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. Although this application discloses geared architecture 48, its teaching may benefit direct drive engines having no geared architecture. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The low pressure compressor 44, high pressure compressor 52, high pressure turbine 54 and low pressure turbine 46 each include one or more stages having a row of rotatable airfoils. Each stage may include a row of vanes adjacent the rotatable airfoils. The rotatable airfoils are schematically indicated at 47, and the vanes are schematically indicated at 49.

The engine 20 may be a high-bypass geared aircraft engine. The bypass ratio can be greater than or equal to 10.0 and less than or equal to about 18.0, or more narrowly can be less than or equal to 16.0. The geared architecture 48 may be an epicyclic gear train, such as a planetary gear system or a star gear system. The epicyclic gear train may include a sun gear, a ring gear, a plurality of intermediate gears meshing with the sun gear and ring gear, and a carrier that supports the intermediate gears. The sun gear may provide an input to the gear train. The ring gear (e.g., star gear system) or carrier (e.g., planetary gear system) may provide an output of the gear train to drive the fan 42. A gear reduction ratio may be greater than or equal to 2.3, or more narrowly greater than or equal to 3.0, and in some embodiments the gear reduction ratio is greater than or equal to 3.4. The gear reduction ratio may be less than or equal to 4.0. The fan diameter is significantly larger than that of the low pressure compressor 44. The low pressure turbine 46 can have a pressure ratio that is greater than or equal to 8.0 and in some embodiments is greater than or equal to 10.0. The low pressure turbine pressure ratio can be less than or equal to 13.0, or more narrowly less than or equal to 12.0. Low pressure turbine 46 pressure ratio is pressure measured prior to an inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present invention is applicable to other gas turbine engines including direct drive turbofans. All of these parameters are measured at the cruise condition described below.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above, and those in the next paragraph are measured at this condition unless otherwise specified.

"Fan pressure ratio" is the pressure ratio across the fan blade 43 alone, without a Fan Exit Guide Vane ("FEGV") system. A distance is established in a radial direction between the inner and outer diameters of the bypass duct 13 at an axial position corresponding to a leading edge of the splitter 29 relative to the engine central longitudinal axis A. The fan pressure ratio is a spanwise average of the pressure ratios measured across the fan blade 43 alone over radial positions corresponding to the distance. The fan pressure ratio can be less than or equal to 1.45, or more narrowly greater than or equal to 1.25, such as between 1.30 and 1.40. "Corrected fan tip speed" is the actual fan tip speed in ft/sec divided by an industry standard temperature correction of [(Tram °R) / (518.7 °R)]^{0.5}. The corrected fan tip speed can be less than or equal to 1150.0 ft / second (350.5 meters/second), and can be greater than or equal to 1000.0 ft / second (304.8 meters/second).

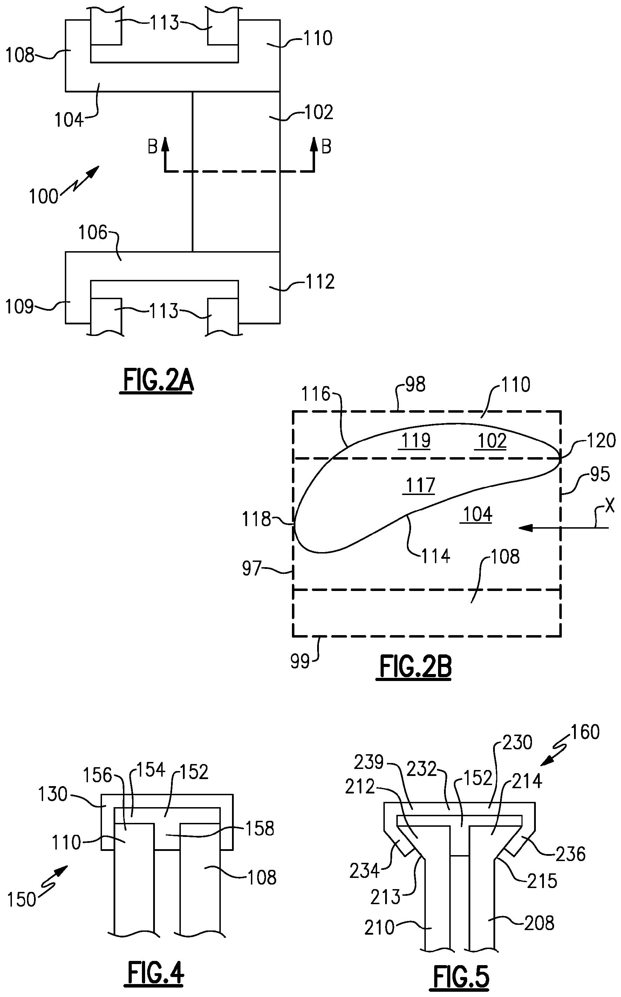

As is known, there are rows or rotating turbine blades with intermediate rows of stator vanes. A stator vane 100 according to this disclosure is illustrated in Figure 2A. Stator vane 100 is formed of ceramic matrix composites ("CMC"). Typically, a plurality of layers or plies of CMCs are used to form stator vane 100.

An airfoil 102 extends between a radially outer platform 104 and a radially inner platform 106. According to this disclosure, the radially outer platform 104 has end flanges 108 and 110 which are shown schematically being mounted to static housing structure 113. The housing structure may be bolted to the flanges 108 and 110, or might be otherwise attached. It should be understood the housing structure 113 is shown quite schematically.

Similarly, the radially inner platform 106 has flanges 109 and 112 attached to mount structure 113.

As mentioned above, in the prior art mount flanges have typically extended along a circumferential direction relative to an axis of rotation of the gas turbine engine. As shown in Figure 2B, the axis of rotation is X. The flanges 108 and 110 are shown here extending generally axially and parallel to the axis of rotation X. As can be appreciated, the airfoil 102 has a pressure face 114 and a suction face 116. The airfoil 102 extends from a leading edge 118 to a trailing edge 120. The platform 104 has a suction side wall 98, pressure side wall 99, leading edge wall 97 and trailing edge wall 95.

The flange 110 is shown associated with the suction side 116 of airfoil 102, and suction side 98 of the platform 104. As can be seen, if the airfoil 102 were extended upwardly through the radially outer platform 104 the airfoils footprint 117 includes some overlap 119 with a footprint of the flange 110. This provides additional strength to the airfoil and the overall stator vane 100. While platform 104 is shown, a similar overlap is found at platform 106.

Depending on design goals, the overlap can be formed on the pressure side 114.

As can be seen in this figure, flanges 108 and 110 extend along the majority of the axial length of sides 114 and 116 of the airfoil 102 and along the majority of the axial length of the sides 99 and 98 of platform 104. The same is true with flanges 109 and 112 on platform 106.

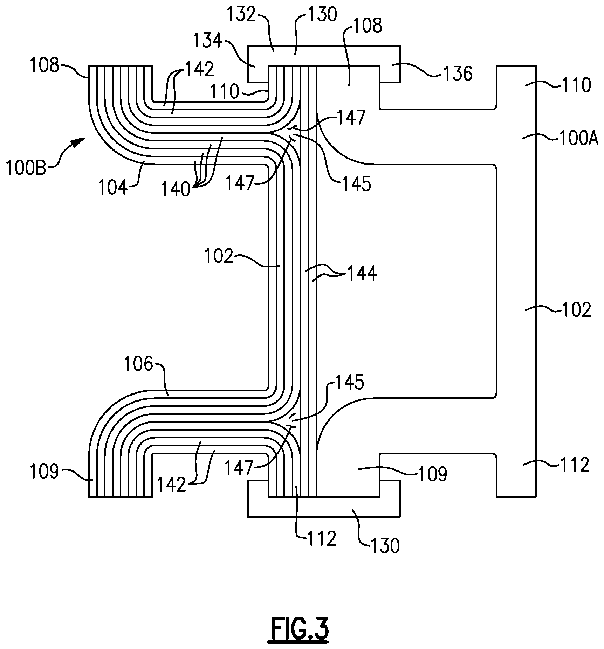

Figure 3 shows two of the stator vanes 100A and 100B that are attached together. As can be seen, a flange 108 of the stator vane 100A is positioned adjacent a flange 110 of the stator vane 100B. Similarly, the flange 112 of the stator vane 100B and the flange 109 of the stator vane 100A are secured together.

It should be understood, additional stator vanes are attached to the opposed side of stator vanes 100A and 100B.

A c-clip 130 snaps over the flanges to secure the two stator vanes 100A and 100B together and to provide a seal. The c-clip 130 has a central web 132 and end ears 134 and 136 which are positioned outwardly of the flanges 110, 108, 112 and 109.

The c-clip could be formed of a CMC material or a metal. It could also be formed of a flexible material to aid in assembly. If the c-clip is formed of a CMC material, it will withstand very high temperatures. In addition, there would not be a difference in the coefficient of thermal expansion between the c-clip 130 and the stator vanes 100A and 100B if CMCs are used to form both.

Providing the securing and sealing structure at this radially outer location removes all such component from a flow path defined radially intermediate the radially outer platform 104 and radially inner platform 106 and the airfoil 102. This provides benefits in reducing flow obstruction.

Figure 3 also schematically shows an example of how the ply layup of the CMC layers could be achieved. As shown, there are a plurality of ply layers 140 beginning in flange 108, extending through the outer platform 104, along an outer surface of the airfoil 102, back along the inner platform 106 and back to the flange 109.

Further, there are layers 142 that extend between one flange 109 along an inner surface of each of the platforms, and to the opposed flange 112. The layers 142 will resist delamination during operation of the component. The same is true of layers 142 between flanges 108 and 110.

Finally, there are layers 144 that extend along one side of the airfoil, and extend from the inner flange 112 entirely to the outer flange 110. These layers in particular will provide additional strength to the stator vane 100.

In addition, hollows 145 may be filled with noodles, which are typically loose fibers 147 (shown schematically) which are then densified when the ply layers are all densified. It is known that the layers are put together, and then a matrix is injected to densify the overall component. At that time, the fibers in the noodle will also become densified. Alternatively, the fibers 147 (also known as noodle) may be predensified such that the shape of the noodle can be controlled for the particular space.

Figure 4 shows a further optional feature 150. Here, a t-seal 152 has a central finger 158 that is positioned between the flanges 108 and 110, and an outer web 154 which sits outwardly of a radial tip 156 of the flanges 108 and 110. A c-clip 130 is shown fitting outwardly of the t-seal. The t-seal 152 may be made of known seal material which has some high temperature capability. The same arrangement can be used at the opposed radial location. The t-seal reduces leakage from the flow path.

Figure 5 shows yet another embodiment 160. Here again, a t-seal 152 is illustrated between flanges 208 and 210. However, this embodiment could be utilized without such a t-seal. The c-clip 230 has a central web 232 and end ears 234 and 236. As shown, the flanges 208 and 210 have radial ends 212 and 214 which have an angled portion that extends in a direction away from the opposed flange. Stated otherwise, the end portions 212 and 214 have an angled outer face 213, 215 which extends in a direction with a circumferential component over the platform to which they are associated. The end ears 234 and 236 are also angled in a complimentary direction such that the c-clip 230 tends to hold two flanges tightly together.

A stator vane for use in a gas turbine engine under this disclosure could be said to include a body formed of ceramic matrix composites ("CMC"). The body has an airfoil with a pressure side and a suction side and extending from a leading edge to a trailing edge. There is a radially outer platform and a radially inner platform attached to the airfoil. Each of the radially inner and radially outer platforms have a pair of flanges on a side of each of the radially inner platform and radially outer platform which is remote from the airfoil.

One of each of the pair of flanges extend along each of the radially inner platform and the radially outer platform. One of each of the pair of flanges at each of the radially inner platform and at the radially outer platform have a first of the pair of flanges associated with the suction side of the airfoil and a second of the pair of flanges associated with the pressure side of the airfoil. The flanges extend in a generally axial direction, and with the first of the pair of flanges extending over at least a majority of the suction side measured between the leading and trailing edge of the airfoil. The second of the pair of flanges extending over at least a majority of the pressure side measured between the leading and trailing edges of the airfoil.

## Claims

1. A plurality of stator vanes (49; 100; 100A; 100B) for use in a gas turbine engine (20) each comprising:
a body formed of ceramic matrix composites ("CMC"), said body having an airfoil (102) with a pressure side (114) and a suction side (116) and extending from a leading edge (118) to a trailing edge (120);
there being a radially outer platform (104) and a radially inner platform (106) attached to said airfoil (102);
each of said radially inner and radially outer platforms (106, 104) having a pair of flanges (108, 110; 109, 112; 208, 210) on a side (98, 99) of each of said radially inner platform (106) and radially outer platform (104) which is remote from said airfoil (102), with one of each said pair of flanges (108, 110; 109, 112; 208, 210) extending along each of said radially inner platform (106) and said radially outer platform (104), and one of each said pair of flanges (108, 110; 109, 112; 208, 210) at each of the radially inner platform (106) and at the radially outer platform (104) having a first of the pair of flanges (108, 110; 109, 112; 208, 210) on the suction side (116) of said airfoil (102) and a second of said pair of flanges (108, 110; 109, 112; 208, 210) on the pressure side (114) of said airfoil (102); and
said flanges (108, 110; 109, 112; 208, 210) extending in a generally axial direction, and with said first of said pair of flanges (108, 110; 109, 112; 208, 210) extending over at least a majority of the suction side (116) measured between the leading and trailing edge (118, 120) of said airfoil (102) and the second of said pair of flanges (108, 110; 109, 112; 208, 210) extending over at least a majority of the pressure side (114) measured between the leading and trailing edges (118, 120) of the airfoil (102),
**characterised in that**
adjacent ones of said stator vanes (49; 100; 100A; 100B) have one of said pair of flanges (108, 110; 109, 112; 208, 210) on each of said radially inner and radially outer platforms (106, 104) secured adjacent to each other through a clip (130; 230).

2. The plurality of stator vanes as set forth in claim 1, wherein a footprint (117) of the airfoil (102) extended through each of the radially inner platform (106) and the radially outer platform (104) has an overlap area (119) with one of said flanges (108, 110; 109, 112; 208, 210) at each of said radially inner platform (106) and the radially outer platform (104), wherein the projection of the footprint (117) is in the radial direction of the airfoil (102).

3. The plurality of stator vanes as set forth in claim 2, wherein the overlap area (119) is with the first of said pair of flanges (108, 110; 109, 112; 208, 210).

4. The plurality of stator vanes as set forth in claim 2 or 3, wherein said airfoil (102) is positioned closer to one of said flanges (108, 110; 109, 112; 208, 210) on each of said radially inner platform (106) and the radially outer platform (104).

5. The plurality of stator vanes as set forth in any preceding claim, wherein a t-seal (152) is positioned adjacent the flanges (108, 110; 109, 112; 208, 210) secured together by the clip (130; 230), with said t-seal (152) having an intermediate finger (158) fitting between said flanges (108, 110; 109, 112; 208, 210), and said clip (130; 230) being positioned outwardly of each of said t-seals (152).

6. The plurality of stator vanes as set forth in any preceding claim, wherein a surface (213, 215) of each of said flanges (210, 208) is formed at an angle, such that the surface (213, 215) extends from an edge radially closer to each of said platform (106, 104) with a component extending in a direction across the associated platform (106, 104) such that the two adjacent flanges (210, 208) being secured to have outwardly extending angled surfaces (213, 215), and said clip (230) having ears (234, 236) and a mating angled inner surface on said ears (234, 236).

7. The plurality of stator vanes as set forth in any preceding claim, wherein said stator vane (49; 100; 100A; 100B) is formed of a plurality of CMC plies (140; 142; 144) layered together to form the airfoil (102), the radially inner platform (106) and the radially outer platform (104), and the pair of flanges (108, 110; 109, 112; 208, 210) at each of the radially inner platform (106) and the radially outer platform (104).

8. The plurality of stator vanes as set forth in claim 7, wherein at least one of said plurality of CMC plies (140; 142; 144) includes a layer (144) extending from one of the flanges (108, 110; 109, 112; 208, 210) at said radially inner platform (106) along a surface of said airfoil (102), and to one of the flanges (108, 110; 109, 112; 208, 210) at said radially outer platform (104).

9. The plurality of stator vanes as set forth in claim 8, wherein at least one of said CMC plies (140; 142; 144) includes a layer (142) forming a portion of each of said pair of flanges (108, 110; 109, 112; 208, 210) at each of the radially inner platform (106) and the radially outer platform (104).

10. The plurality of stator vanes as set forth in claim 9, wherein said plurality of CMC plies (140; 142; 144) include layers (140) forming an outer surface of one of the pair of flanges (108, 110; 109, 112; 208, 210) at said radially outer platform (104), extending along a surface of said airfoil (102), and to an outer surface of one of the pair of flanges (108, 110; 109, 112; 208, 210) at said radially inner platform (104).

11. A gas turbine engine (20) comprising:
a compressor section (24);
a combustor (56); and
a turbine section (28), said turbine section (28) having rotating turbine blades (47) and stator vanes (49; 100) intermediate rows of said rotating turbine blades (47), said stator vanes (49; 100) each being one of the plurality of stator vanes (49; 100) as set forth in any preceding claim.

## Patentansprüche

1. Vielzahl von Statorleitschaufeln (49; 100; 100A; 100B) zur Verwendung in einem Gasturbinentriebwerk (20), die jeweils Folgendes umfassen:
einen Körper aus Keramikmatrix-Verbundwerkstoffen ("CMC"), wobei dieser Körper ein Schaufelprofil (102) mit einer Druckseite (114) und einer Saugseite (116) aufweist, das sich von einer Vorderkante (118) bis zu einer Hinterkante (120) erstreckt;
wobei eine radial äußere Plattform (104) und eine radial innere Plattform (106) an dem Schaufelprofil (102) befestigt sind; jede der radial inneren und radial äußeren Plattformen (106, 104) weist an einer Seite (98, 99) der radial inneren Plattform (106) und der radial äußeren Plattform (104), die vom Schaufelprofil (102) entfernt ist, ein Paar von Flanschen (108, 110; 109, 112; 208, 210) auf, wobei sich jeweils ein Paar von Flanschen (108, 110; 109, 112; 208, 210) entlang der radial inneren Plattform (106) und der radial äußeren Plattform (104) erstreckt, und an der radial inneren Plattform (106) und an der radial äußeren Plattform (104) weist jeweils eines der Paare von Flanschen (108, 110; 109, 112; 208, 210) ein erstes Paar von Flanschen (108, 110; 109, 112; 208, 210) auf der Saugseite (116) des Schaufelprofils (102) und ein zweites Paar von Flanschen (108, 110; 109, 112; 208, 210) auf der Druckseite (114) des Schaufelprofils (102) auf; und
die Flansche (108, 110; 109, 112; 208, 210) erstrecken sich im Allgemeinen axial, wobei das erste Paar von Flanschen (108, 110; 109, 112; 208, 210) sich über mindestens einen Großteil der Saugseite (116) erstreckt, gemessen zwischen der Vorder- und Hinterkante (118, 120) des Schaufelprofils (102), und das zweite Paar von Flanschen (108, 110; 109, 112; 208, 210) sich über mindestens einen Großteil der Druckseite (114) erstreckt, gemessen zwischen der Vorder- und Hinterkante (118, 120) des Schaufelprofils (102),
**dadurch gekennzeichnet, dass**
benachbarte Statorleitschaufeln (49; 100; 100A; 100B) jeweils eines der Paare von Flanschen (108, 110; 109, 112; 208, 210) auf den radial inneren und radial äußeren Plattformen (106, 104) aufweisen, die mittels einer Klemme (130; 230) nebeneinander befestigt sind.

2. Vielzahl der Statorleitschaufeln nach Anspruch 1, wobei eine durch die radial innere Plattform (106) und die radial äußere Plattform (104) verlaufende Auflagefläche (117) des Schaufelprofils (102) eine Überlappungsfläche (119) mit einem der Flansche (108, 110; 109, 112; 208, 210) an der radial inneren Plattform (106) und der radial äußeren Plattform (104) aufweist, wobei der Vorsprung der Auflagefläche (117) in radialer Richtung des Schaufelprofils (102) verläuft.

3. Vielzahl der Statorleitschaufeln nach Anspruch 2, wobei die Überlappungsfläche (119) mit dem ersten der Paare von Flanschen (108, 110; 109, 112; 208, 210) verbunden ist.

4. Vielzahl der Statorleitschaufeln nach Anspruch 2 oder 3, wobei das Schaufelprofil (102) näher an einem der Flansche (108, 110; 109, 112; 208, 210) auf jeder der radial inneren Plattformen (106) und der radial äußeren Plattformen (104) positioniert ist.

5. Vielzahl der Statorleitschaufeln nach einem der vorhergehenden Ansprüche, wobei eine T-Dichtung (152) neben den Flanschen (108, 110; 109, 112; 208, 210) angeordnet ist, die durch die Klemme (130; 230) zusammengehalten werden, wobei die T-Dichtung (152) einen Zwischenfinger (158) aufweist, der zwischen die Flansche (108, 110; 109, 112; 208, 210) passt, und die Klemme (130; 230) außerhalb jeder der T-Dichtungen (152) angeordnet ist.

6. Vielzahl der Statorleitschaufeln nach einem der vorhergehenden Ansprüche, wobei eine Fläche (213, 215) jedes der Flansche (210, 208) in einem Winkel ausgebildet ist, so dass sich die Fläche (213, 215) von einer Kante erstreckt, die radial näher an jeder der Plattformen (106, 104) liegt, wobei sich ein Element in Richtung über die zugehörige Plattform (106, 104) erstreckt, sodass die beiden benachbarten Flansche (210, 208) so befestigt sind, dass sie nach außen gerichtete, abgewinkelte Flächen (213, 215) aufweisen, und die Klammer (230) Laschen (234, 236) und eine passende, abgewinkelte Innenfläche an den Laschen (234, 236) aufweist.

7. Vielzahl von Statorleitschaufeln nach einem der vorhergehenden Ansprüche, wobei die Statorleitschaufel (49; 100; 100A; 100B) aus einer Vielzahl von CMC-Lagen (140; 142; 144) besteht, die übereinander geschichtet sind und das Schaufelprofil (102), die radial innere Plattform (106) und die radial äußere Plattform (104) sowie das Paar von Flanschen (108, 110; 109, 112; 208, 210) an jeder der radial inneren Plattform (106) und der radial äußeren Plattform (104) bilden.

8. Vielzahl von Statorleitschaufeln nach Anspruch 7, wobei mindestens eine der Vielzahl von CMC-Lagen (140; 142; 144) eine Schicht (144) aufweist, die sich von einem der Flansche (108, 110; 109, 112; 208, 210) an der radial inneren Plattform (106) entlang einer Oberfläche des Schaufelprofils (102) bis zu einem der Flansche (108, 110; 109, 112; 208, 210) an der radial äußeren Plattform (104) erstreckt.

9. Vielzahl von Statorleitschaufeln nach Anspruch 8, wobei mindestens eine der CMC-Lagen (140; 142; 144) eine Schicht (142) aufweist, die einen Teil jedes der Paare von Flanschen (108, 110; 109, 112; 208, 210) an der radial inneren Plattform (106) und der radial äußeren Plattform (104) bildet.

10. Vielzahl der Statorleitschaufeln nach Anspruch 9, wobei die Vielzahl der CMC-Lagen (140; 142; 144) Schichten (140) umfasst, die eine Außenfläche eines der Paare von Flanschen (108, 110; 109, 112; 208, 210) an der radial äußeren Plattform (104) bilden, sich entlang einer Oberfläche des Schaufelprofils (102) erstrecken und bis zu einer Außenfläche eines der Paare von Flanschen (108, 110; 109, 112; 208, 210) an der radial inneren Plattform (104) reichen.

11. Gasturbinentriebwerk (20), umfassend:
einen Verdichterabschnitt (24);
eine Brennkammer (56); und
einen Turbinenabschnitt (28), wobei der Turbinenabschnitt (28) rotierende Turbinenschaufeln (47) und Statorleitschaufeln (49; 100) zwischen den Reihen der rotierenden Turbinenschaufeln (47) aufweist, wobei die Statorleitschaufeln (49; 100) jeweils eine der Vielzahl von Statorleitschaufeln (49; 100) sind, wie in einem der vorhergehenden Ansprüche dargelegt.

## Revendications

1. Pluralité d'aubes de stator (49 ; 100 ; 100A ; 100B) destinées à être utilisées dans un moteur à turbine à gaz (20), chacune comprenant :
un corps constitué d'un composite à matrice céramique («CMC»), ledit corps présentant un profil aérodynamique (102) ayant une face de pression (114) et une face d'aspiration (116) et s'étendant depuis un bord d'attaque (118) vers un bord de fuite (120) ;
il existe une plate-forme radialement externe (104) et une plate-forme radialement interne (106) fixées audit profil aérodynamique (102) ;
chacune desdites plate-formes radialement interne et radialement externe (106, 104) présentant une paire de brides (108, 110 ; 109, 112 ; 208, 210) sur un côté (98, 99) de chacune desdites plate-formes radialement interne (106) et radialement externe (104) qui est éloigné dudit profil aérodynamique (102), l'une de chacune desdites paires de brides (108, 110 ; 109, 112 ; 208, 210) s'étendant le long de chacune desdites plate-formes radialement interne (106) et radialement externe (104), et l'une de chacune desdites paires de brides (108, 110 ; 109, 112 ; 208, 210), au niveau de la plate-forme radialement interne (106) et au niveau de la plate-forme radialement externe (104), présentant une première bride de ladite paire de brides (108, 110 ; 109, 112 ; 208, 210) sur la face d'aspiration (116) dudit profil aérodynamique (102) et une seconde bride de ladite paire de brides (108, 110 ; 109, 112 ; 208, 210) sur la face de pression (114) dudit profil aérodynamique (102) ; et
lesdites brides (108, 110 ; 109, 112 ; 208, 210) s'étendant globalement dans une direction axiale, ladite première de ladite paire de brides (108, 110 ; 109, 112 ; 208, 210) s'étendant sur au moins la majeure partie de la face d'aspiration (116), mesurée entre les bords d'attaque et de fuite (118, 120) dudit profil aérodynamique (102), et la seconde de ladite paire de brides (108, 110 ; 109, 112 ; 208, 210) s'étendant sur au moins la majeure partie de la face de pression (114), mesurée entre les bords d'attaque et de fuite (118, 120) du profil aérodynamique (102),
**caractérisé en ce que**
des aubes de stator adjacentes parmi lesdites aubes de stator (49 ; 100 ; 100A ; 100B) présentent l'une de ladite paire de brides (108, 110 ; 109, 112 ; 208, 210) sur chacune desdites plate-formes radialement interne et radialement externe (106, 104) solidarisée à la bride correspondante de l'aube adjacente au moyen d'un clip (130 ; 230).

2. Pluralité d'aubes de stator selon la revendication 1, dans laquelle une empreinte (117) du profil aérodynamique (102) prolongée à travers chacune de la plate-forme radialement interne (106) et de la plate-forme radialement externe (104) présente une zone de recouvrement (119) avec l'une desdites brides (108, 110 ; 109, 112 ; 208, 210) au niveau de chacune desdites plate-formes radialement interne (106) et radialement externe (104), dans laquelle la projection de l'empreinte (117) s'effectue dans la direction radiale du profil aérodynamique (102).

3. Pluralité d'aubes de stator selon la revendication 2, dans laquelle la zone de recouvrement (119) est obtenue avec la première bride de ladite paire de brides (108, 110 ; 109, 112 ; 208, 210).

4. Pluralité d'aubes de stator selon la revendication 2 ou 3, dans laquelle ledit profil aérodynamique (102) est positionné plus près de l'une desdites brides (108, 110 ; 109, 112 ; 208, 210) sur chacune desdites plate-formes radialement interne (106) et radialement externe (104).

5. Pluralité d'aubes de stator selon l'une quelconque des revendications précédentes, dans laquelle un joint en T (152) est positionné au voisinage des brides (108, 110 ; 109, 112 ; 208, 210) solidarisées par le clip (130 ; 230), le joint en T (152) présentant un doigt intermédiaire (158) qui s'engage entre lesdites brides (108, 110 ; 109, 112 ; 208, 210), et ledit clip (130 ; 230) étant disposé vers l'extérieur de chacun desdits joints en T (152).

6. Pluralité d'aubes de stator selon l'une quelconque des revendications précédentes, dans laquelle une surface (213, 215) de chacune desdites brides (210, 208) est formée suivant un angle, de sorte que la surface (213, 215) s'étend à partir d'un bord radialement plus proche de chacune desdites plate-formes (106, 104), avec une composante s'étendant dans une direction à travers la plate-forme associée (106, 104), de sorte que deux brides adjacentes (210, 208) ainsi solidarisées présentent des surfaces inclinées (213, 215) s'étendant vers l'extérieur, et dans laquelle ledit clip (230) présente des oreilles (234, 236) et une surface intérieure inclinée complémentaire sur lesdites oreilles (234, 236).

7. Pluralité d'aubes de stator selon l'une quelconque des revendications précédentes, dans laquelle ladite aube de stator (49 ; 100 ; 100A ; 100B) est formée d'une pluralité de plis en CMC (140 ; 142 ; 144) superposés pour former le profil aérodynamique (102), la plate-forme radialement interne (106) et la plate-forme radialement externe (104), ainsi que la paire de brides (108, 110 ; 109, 112 ; 208, 210) au niveau de chacune des plate-formes radialement interne (106) et radialement externe (104).

8. Pluralité d'aubes de stator selon la revendication 7, dans laquelle l'au moins un desdits plis en CMC (140 ; 142 ; 144) comprend une couche (144) qui s'étend à partir de l'une des brides (108, 110 ; 109, 112 ; 208, 210) au niveau de ladite plate-forme radialement interne (106) le long d'une surface dudit profil aérodynamique (102), et jusqu'à l'une des brides (108, 110 ; 109, 112 ; 208, 210) au niveau de ladite plate-forme radialement externe (104).

9. Pluralité d'aubes de stator selon la revendication 8, dans laquelle au moins un desdits plis en CMC (140 ; 142 ; 144) comprend une couche (142) formant une portion de chacune desdites paires de brides (108, 110 ; 109, 112 ; 208, 210) au niveau de chacune desdites plate-formes radialement interne (106) et radialement externe (104).

10. Pluralité d'aubes de stator selon la revendication 9, dans laquelle ladite pluralité de plis en CMC (140 ; 142 ; 144) comprend des couches (140) formant une surface externe de l'une des brides de ladite paire de brides (108, 110 ; 109, 112 ; 208, 210) au niveau de ladite plate-forme radialement externe (104), s'étendant le long d'une surface dudit profil aérodynamique (102), et jusqu'à une surface externe de l'une des brides de ladite paire de brides (108, 110 ; 109, 112 ; 208, 210) au niveau de ladite plate-forme radialement interne (104).

11. Moteur à turbine à gaz (20) comprenant :
une section de compresseur (24) ;
une chambre de combustion (56) ; et
une section de turbine (28), ladite section de turbine (28) présentant des aubes de turbine rotatives (47) et des aubes de stator (49 ; 100) entre des rangées desdites aubes de turbine rotatives (47), lesdites aubes de stator (49 ; 100) chacune étant l'une de la pluralité d'aubes de stator (49 ; 100) selon l'une quelconque des revendications précédentes.
